# EUROPÄISCHE PATENTANMELDUNG

(11) **EP 4 848 524 A1**
(43) Veröffentlichungstag der Anmeldung: **02.12.2026**
(21) Anmeldenummer: 25179087.9
(22) Anmeldetag: 27.05.2025
(51) Int. Cl.: H02J 7/00

(54) **VERFAHREN ZUM STEUERN EINES ELEKTRISCHEN ENTLADE-PROZESSES EINER BATTERIE, ENTLADE-VORRICHTUNG, COMPUTERPROGRAMMPRODUKT ZUM DURCHFÜHREN DES VERFAHRENS UND COMPUTERLESBARES SPEICHERMEDIUM MIT DEM COMPUTERPROGRAMMPRODUKT SOWIE WIEDER-AUFBEREITUNGS-VERFAHREN EINER BATTERIE**

(71) Anmelder: Siemens Aktiengesellschaft, 80333 München (DE)
(72) Erfinder: Baldauf, Manfred, 91056 Erlangen (DE); Bellut, Lukas, 97737 Gemünden am Main (DE); Chan, Hoon Seng, 91052 Erlangen (DE); Fischer, Michael, 91320 Ebermannstadt (DE); Katzer, Felix, 90763 Fürth (DE); Radinger, Hannes, 86152 Augsburg (DE); Schmid, Arthur, 80337 München (DE); Schricker, Barbara, 91058 Erlangen (DE)
(74) Vertreter: Siemens Patent Attorneys

(57) **Zusammenfassung**

Die Erfindung betrifft ein Verfahren zum Steuern eines elektrischen Entlade-Prozesses mindestens einer Batterie, die eine Vielzahl von elektrisch miteinander verschalteten Batterie-Zellen aufweist. Das Verfahren weist folgende Verfahrens-Schritte auf:
a) Bestimmen des elektrischen Entlade-Prozesses,
b) Festlegen eines Soll-Wert-Bereichs einer Soll-Wert-Rate für mindestens einen zeitlich veränderbaren Batterie-Parameter,
c) Anlegen eines Entlade-Stroms an die Batterie und Ermitteln einer Ist-Wert-Rate des Batterie-Parameters,
d) Analysieren der Ist-Wert-Rate, wobei für das Analysieren geprüft wird, ob die Ist-Wert-Rate im Soll-Wert-Bereich liegt, und ob damit ein Hinweis auf eine unerwünschte zeitliche Änderung eines Innen-Widerstands zumindest einer der Batterie-Zellen der Batterie vorliegt,
e) Steuern des elektrischen Entlade-Prozesses in Abhängigkeit eines Analyse-Ergebnisses des Analysierens.

Anwendung findet die Erfindung für die Wieder-Aufbereitung von Batterien, z.B. Lithium-Ionen-Batterien, wobei die Batterien mit Hilfe des Verfahrens sicher und vollständig entladen werden können.

## Beschreibung

Die Erfindung betrifft ein Verfahren zum Steuern eines elektrischen Entlade-Prozesses einer Batterie. Daneben werden eine Entlade-Vorrichtung, ein Computerprogrammprodukt zum Durchführen des Verfahrens und ein computerlesbares Speichermedium mit dem Computerprogrammprodukt sowie ein Wieder-Aufbereitungs-Verfahren einer Batterie angegeben.

Eine Batterie (z.B. Lithium-Ionen-Batterie), die i.d.R. als Batterie-Pack (Batterie-Modul) vorliegt, bei dem eine Vielzahl von Batterie-Zellen elektrisch parallel und/oder seriell verschaltetet sind, ist ein Speicher für elektrische Energie. Angesichts des stetig zunehmenden Einsatzes von Batterien in elektrischen Geräten und angesichts der wachsenden Zahl an Elektroautos (mit Batterien) ist ein sicheres und effizientes Wieder-Aufbereiten (Recycling) von Batterien ein wichtiges Thema. Unter den verschiedenen Schritten des Wieder-Aufbereitungs-Verfahrens der Batterie spielt ein Tiefentladen (Tiefentlade-Prozess) der Batterie vor dem eigentlichen Rückgewinnungs-Prozess der Batterie eine wichtige Rolle. Vor dem eigentlichen Rückgewinnungs-Prozess wird die in der Batterie verbliebene, noch gespeicherte elektrische Energie (elektrische Rest-Energie) entfernt. Die Batterie wird tiefentladen.

Während des Tiefentlade-Prozesses kann der Innen-Widerstand der Batterie steigen. Dies führt zu einer thermischen Belastung der Batterie: Die Batterie erwärmt sich während des Tiefentladens.

Eine einfache Methode, bei der eine Batterie tiefentladen werden kann, ohne dass es zu einer unkontrollierbaren thermischen Belastung der Batterie kommt, ist ein Versenken der Batterie in einer Salz-Lösung während des Entlade-Prozesses. Allerdings ist das Entladen über diese Methode mit einigen Nachteilen verbunden: Der Entlade-Prozess ist meist langsam. Bei diesem Entlade-Prozess können giftige Gase entstehen. Die in der Batterie gespeicherte Energie kann bei diesem Entlade-Prozess nicht genutzt werden. Darüber hinaus kann das Entladen der Batterie unvollständig sein, sodass nach Entnahme der Batterie aus der Salz-Lösung eine unerwünscht hohe elektrische Rest-Spannung in der Batterie zurückbleiben kann. Ergebnis: Die beschriebene Methode ist zwar einfach, ein sicheres Entladen der Batterie ist aber nicht automatisch gewährleistet.

Aufgabe der vorliegenden Erfindung ist es, aufzuzeigen, wie ein sicheres Entladen einer Batterie funktionieren kann.

Zur Lösung der Aufgabe wird ein Verfahren zum Steuern eines elektrischen Entlade-Prozesses mindestens einer Batterie angegeben, die eine Vielzahl von elektrisch miteinander verschalteten Batterie-Zellen aufweist. Das Verfahren weist folgende Verfahrens-Schritte auf:
a) Bestimmen des elektrischen Entlade-Prozesses,
b) Festlegen eines Soll-Wert-Bereichs einer Soll-Wert-Rate für mindestens einen zeitlich veränderbaren Batterie-Parameter,
c) Anlegen eines Entlade-Stroms an die Batterie und Ermitteln einer Ist-Wert-Rate des Batterie-Parameters,
d) Analysieren der Ist-Wert-Rate, wobei für das Analysieren geprüft wird, ob die Ist-Wert-Rate im Soll-Wert-Bereich liegt, und ob damit ein Hinweis auf eine unerwünschte zeitliche Änderung eines Innen-Widerstands zumindest einer der Batterie-Zellen der Batterie vorliegt, und
e) Steuern des elektrischen Entlade-Prozesses in Abhängigkeit eines Analyse-Ergebnisses des Analysierens.

Zur Lösung der Aufgabe wird auch eine Entlade-Vorrichtung zum Entladen mindestens einer Batterie angegeben, wobei die Entlade-Vorrichtung
- mindestens ein Detektor-Element zum Ermitteln der Ist-Wert-Rate des Batterie-Parameters und
- mindestens ein Steuer-Element mit elektronischer Rechen-Einheit aufweist, das zum Durchführen eines Verfahrens ausgebildet ist.

Darüber hinaus werden zur Lösung der Aufgabe ein Computerprogrammprodukt zum Durchführen des Verfahrens sowie ein computerlesbares Speichermedium mit dem Computerprogrammprodukt angegeben.

Schließlich wird ein Wieder-Aufbereitungs-Verfahren einer Batterie unter Anwendung des Verfahrens, der Entlade-Vorrichtung, dem Computerprogrammprodukt oder des computerlesbaren Speichermediums vorgestellt.

Mit der Erfindung wird der Entlade-Prozess einer Batterie gesteuert. Dazu wird der Entlade-Prozess ständig überwacht, und zwar im Hinblick auf die Soll-Wert-Rate , d.h. im Hinblick auf einen Soll-Wert der Änderungs-Rate des zeitlich veränderbaren Batterie-Parameters. In Abhängigkeit des Ergebnisses des Überwachens (Analyse-Ergebnis) wird unter Umständen in den Entlade-Prozess eingegriffen. Damit ist es möglich, dass das elektrische Entladen der Batterie sicher durchgeführt werden kann.

Das Verfahren kann für einen beliebigen Entlade-Prozess einer Batterie eingesetzt werden. Gemäß einer Ausgestaltung der Erfindung wird als Entlade-Prozess der Batterie ein Tief-Entlade-Prozess der Batterie verwendet. Der Tief-Entlade-Prozess einer Batterie wird überwacht und gesteuert. Durch das Tief-Entladen nimmt die Batterie nach der StromEntnahme einen Batterie-Zustand bis zur nahezu vollständigen Erschöpfung einer Batterie-Kapazität oder bis unter eine bestimmte elektrische Batterie-Spannung ein. Einer Zunahme des Innenwiderstands der Batterie und damit einer Erhöhung der Temperatur der Batterie kann entgegengesteuert werden.

Der Batterie-Parameter ist eine physikalische Größe, die im Zusammenhang mit dem Entlade-Prozess der Batterie steht und die sich direkt im Entlade-Prozess messen lässt, um deren Ist-Wert-Rate zu bestimmen. Darüber wird der Entlade-Prozess der Batterie gesteuert.

Als Batterie-Parameter kann eine beliebige physikalische oder chemische Größe verwendet werden. In einer Ausgestaltung der Erfindung wird als Batterie-Parameter zumindest eine aus der Gruppe elektrische Spannung, elektrischer Strom , elektrische Leistung und Temperatur ausgewählte physikalische Größe der Batterie verwendet.

Gemäß einer weiteren Ausgestaltung der Erfindung wird zum Steuern des Entlade-Prozesses mindestens eine aus der Gruppe Beibehalten des Entlade-Prozesses, Modifizieren des Entlade-Prozesses und Blockieren des Entlade-Prozesses ausgewählter Entlade-Modus verwendet wird. In Abhängigkeit vom Analyse-Ergebnis wird das weitere Vorgehen bezüglich des Entlade-Prozesses ausgewählt. Dabei kann der Entlade-Prozess fortgeführt oder angepasst (modifiziert) werden. Im Entlade-Modus Blockieren des Entlade-Prozesses kann ein bereits angewandter Entlade-Prozess unterbrochen werden.

In Abhängigkeit des Analyse-Ergebnisses kann der Entlade-Prozess angepasst werden. In einer Ausgestaltung der Erfindung wird als Entlade-Modus das Modifizieren des Entlade-Prozesses verwendet und zum Modifizieren des Entlade-Prozesses ein Entlade-Strom angepasst, mit dem die Batterie entladen wird.

Gemäß einer weiteren Ausgestaltung wird mindestens eine aus der Gruppe i) Messung eines frequenzabhängigen Impedanz-Spektrums der Batterie und ii) Messung eines zeitabhängigen Relaxations-Verhaltens der Batterie. ausgewählte Mess-Methode durchgeführt. Die hier angegebenen Mess-Methoden (Impedanz-Messung und Relaxations-Messung) sind zusätzliche Analyse-Verfahren, die den eigentlichen Entlade-Prozess unterbrechen oder zumindest überlagern. Als Ergebnis dieser Mess-Methoden ergibt sich dann der Widerstand (konkreter: die komplexe frequenz- bzw. zeitabhängige Impedanz) der Batterie. Für beide Mess-Methoden ergeben jeweils Messwert-Verläufe, für die sich wieder Soll-Wert-Bereiche definieren lassen.

Für ein Fein-Abstimmen des Entlade-Prozesses ist es vorteilhaft, den ganzen Entlade-Prozess oder zumindest einzelne Prozess-Schritte wiederholt durchzuführen. In einer Ausgestaltung der Erfindung werden daher zumindest einer der Verfahrens-Schritte a) bis e) und/oder zumindest eine der Mess-Methoden i) und ii) wiederholt durchgeführt.

Das beschriebene Steuern des Entlade-Prozesses kann für beliebig große und kleine Batterien verwendet werden. In einer weiteren Ausgestaltung wird daher eine Batterie mit einer Vielzahl von elektrisch parallel und/oder elektrisch seriell verschalteten Batterie-Zellen von mindestens 5 und insbesondere von mindestens 50 verwendet wird. Die Erfindung kann also auf kleinere Batterie-Module, bestehend aus beispielsweise 10 elektrisch parallel und/oder seriell verschalteten Batterie-Zellen oder größerer Batterie-Module (einer Hochvolt-Batterie) verwendet werden, bei denen über 100 Batterie-Zellen parallel und/oder seriell verschalteten sind.

Mit der Erfindung wird das Entladen der gesamten Batterie gesteuert. Denkbar ist auch, dass das Entladen für Teile der Batterie mit mehreren elektrisch verschalteten Batterie-Zellen separat gesteuert werden. Diese Teile der Batterie können unterschiedliche Erfordernisse im Hinblick auf den Entlade-Prozess aufweisen. Dem wird damit Rechnung getragen, dass die Batterie unterteilt wird. In einer weiteren Ausgestaltung der Erfindung werden daher mehrere der Batterie-Zellen zu einer Batterie-Zellen-Gruppe zusammengefasst und als Batterie-Parameter ein Batterie-Zellen-Gruppen-Parameter dr Batterie-Zellen-Gruppe verwendet.

Das Verfahren lässt sich auf das Entladen von beliebigen Batterien anwenden. Beispielsweise ist die Batterie eine Einweg-Batterie (nicht wieder aufladbar). Insbesondere wird als Batterie eine wiederaufladbare Batterie verwendet wird. Als wiederaufladbare Batterie wird vorzugsweise eine Lithium-Ionen-Batterie verwendet.

Zusammenfassend sind folgende Vorteile hervorzuheben:
- Das elektrische Entladen einer Batterie kann sicher und schnell erfolgen.
- Eine Batterie, die aus mehreren elektrisch verschalteten Batterie-Zellen besteht, kann ebenfalls sicher entladen werden. Dabei wird anhand des Analyse-Ergebnisses für die gesamte Batterie überprüft, ob sich mindestens eine der Batterie-Zellen nicht im gewünschten Entlade-Zustand befindet, der ein Unterbrechen oder Modifizieren des Entlade-Modus notwendig machen würde.
- Mit der Erfindung werden Innen-Widerstands-Änderungen einzelner Batterie-Zellen bei der Tief-Entladung von Batterie-Modulen detektiert. Dadurch kann der Entlade-Prozess entsprechend angepasst und somit kritischen bzw. unerwünschten Effekten (z.B. ungeeignete Zellspannungen, lokale Wärmeentwicklung) entgegengewirkt werden.
- Eine Ansteuerung des Batterie-Management-Systems ist für die Anpassung nicht notwendig. Dadurch ist das Verfahren deutlich sicherer als das einfache Tief-Entladen basierend auf festen Strom- oder Spannungs-Verläufen.
- Das Verfahren ist auch anwendbar, wenn mehrere Batterie-Zellen in der Batterie (eventuell gleichzeitig) ein entsprechendes Verhalten zeigen sollten.
- Im Vergleich zu einer unvollständigen Entladung einer Batterie, die die Sicherheit des Entlade-Prozesses gewährleisten soll, erlaubt das vorgestellte Verfahren eine ebenso sichere und möglichst umfangreiche Entladung der Batterie. Dies wirkt sich in einem geringeren Restenergieinhalt und einer geringeren Restspannung nach dem Entlade-Prozess aus, was die Sicherheit der weiteren Handhabung verbessert.
- Außerdem erhöht sich die Menge an Energie, die zur Versorgung der Recycling-Prozesse rekuperiert oder in ein Verteil-Netz rückgespeist werden kann.
- Verglichen mit sehr langsamen Tief-Entladungs-Prozessen, die Überspannungen (und Wärmeentwicklung) geringhalten, erlaubt das vorgestellte Vorgehen einen möglichst schnellen Entlade-Prozess bei erhöhter Sicherheit, was die Wirtschaftlichkeit der Tief-Entladung deutlich verbessert.

Im Folgenden wird die Erfindung anhand mehrer Ausführungsbeispiel und der dazugehörigen Figuren näher beschrieben. Die Figuren sind schematisch und stellen keine maßstabsgetreuen Abbildung dar.
Figur 1 zeigt ein Verfahren zum Steuern eines elektrischen Entlade-Prozesses einer Batterie.
Figur 2 zeigt Einzelheiten des Verfahrens zum Steuern des elektrischen Entlade-Prozesses.
Figur 3 zeigt eine Entlade-Vorrichtung.
Figur 4 zeigt den zeitlichen Verlauf der Batterie-Spannung einer Batterie während eines Tief-Entlade-Prozesses.

Gemäß der Ausführungsbeispiele wird ein Verfahren 1000 zum Steuern eines elektrischen Entlade-Prozesses einer Batterie 11 vorgestellt. Die Batterie ist eine Lithium-Ionen-Batterie mit einem Batterie-Modul (Batterie-Pack) 110 mit einer Vielzahl elektrisch seriell geschalteter Batterie-Zellen (Lithium-Ionen-Batterie-Zellen) 111. In einem alternativen Ausführungsbeispiel sind die Batterie-Zellen parallel geschalten.

Das Verfahren zum Steuern des Entladens wird im Rahmen eines Wieder-Aufarbeitungs-Verfahrens 1 der Batterie 11 angewendet. Dazu wird als Entlade-Prozess ein Tief-Entlade-Prozess der Batterie durchgeführt.

Das Verfahren weist folgende Verfahrens-Schritte auf:
a) Bestimmen 1001 des elektrischen Entlade-Prozesses,
b) Festlegen 1002 eines Soll-Wert-Bereichs einer Soll-Wert-Rate für mindestens einen zeitlich veränderbaren Batterie-Parameter,
c) Anlegen 1003 eines Entlade-Stroms an die Batterie und Ermitteln 1004 einer Ist-Wert-Rate des Batterie-Parameters,
d) Analysieren 1005 der Ist-Wert-Rate, wobei für das Analysieren geprüft wird, ob die Ist-Wert-Rate im Soll-Wert-Bereich liegt, und ob damit ein Hinweis auf eine unerwünschte zeitliche Änderung eines Innen-Widerstands zumindest einer der Batterie-Zellen der Batterie vorliegt,
e) Steuern 1006 des elektrischen Entlade-Prozesses in Abhängigkeit eines Analyse-Ergebnisses des Analysierens.

Während der Tiefentladung wird die Erhöhung des Innen-Widerstands einzelner der seriell verschalteten Batterie-Zellen, detektiert. Damit kann erkannt werden, ob es bei Batterie-Zellen der Batterie zu kritischem Verhalten kommt. Entsprechend wird der Tief-Entlade-Prozess der Batterie darauf basierend angepasst, so dass eine möglichst vollständige Entladung der Batterie bei gleichzeitig sicherem Prozess-Verlauf (Vermeidung von zu starker Umpolung oder Wärmeverlusten) erreicht wird.

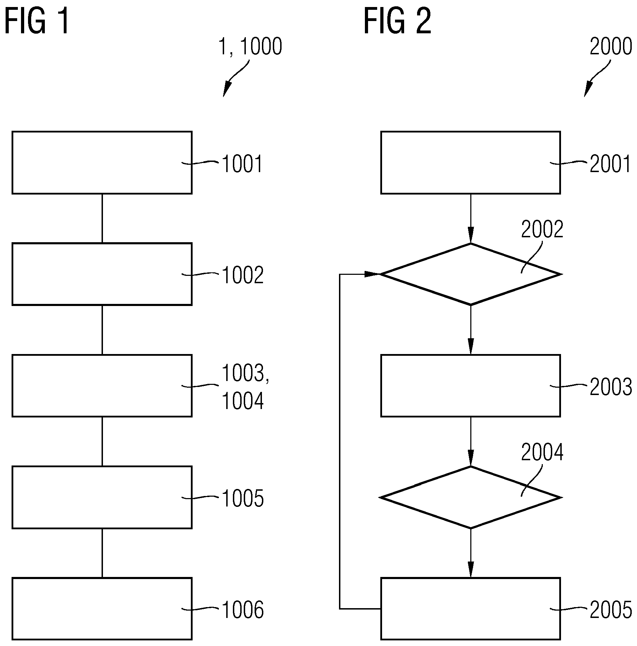

Die Figur 2 stellt die einzelnen Schritte und die Abfolge des hier vorgestellten Verfahrens 2000 zum Steuern eines elektrischen Entlade-Prozesses einer Batterie dar. Mit dem Schritt 2001 wird der Prozess gestartet, wobei zunächst ein Entlade-Prozess mit entsprechenden Batterie-Parametern (Prozess-Parameter) und deren Soll-Werte (Soll-Wert-Bereich) festgelegt (vorgegeben) wird. Bei den Batterie-Parametern kann es sich um anzulegende Strom- oder Spannungswerte (und ggf. Temperaturwerte) handeln oder um Bedingungen und Grenzen für den Entlade-Prozess, bei denen sich diese Werte ändern können oder bei denen der Entlade-Prozess abgeschlossen wird.

Im weiteren Schritt 2002 wird der Frage nachgegangen, ob nach Anlegen eines Entlade-Stroms an die Batterie Auffälligkeiten hinsichtlich der Batterie-Parameter vorliegen. Wenn Auffälligkeiten vorliegen, findet mit dem nächsten Prozess-Schritt 2003 ein Prüfen der Batterie-Parameter statt. Es wird geprüft, ob die Ist-Wert-Rate im Soll-Wert-Bereich liegt. Wenn die Ist-Wert-Rate im Soll-Wert-Bereich liegt (Entscheidungs-Schritt 2004), wird der Prozess beendet. Wenn die Ist-Wert-Rate nicht im Soll-Wert-Bereich liegt, wird eine Anpassung 2005 des Prozesses vorgenommen und nachfolgend der Prozess ab Schritt 2002 wiederholt.

Mit der Erfindung werden Angaben gemacht, die zur Detektion von Abweichungen im Prozess dienen und so auf Innenwiderstands-Änderungen einzelner Batterie-Zellen während des Tief-Entlade-Prozesses hinweisen. Konkret kann beispielsweise bei einem Entlade-Prozess mit vorgegebener Strom-Stärke davon ausgegangen werden, dass signifikante Änderungen im messbaren Spannungs-Verlauf der Batterie auftreten, sobald sich eine der Batterie-Zellen einer Zell-Spannung von 0 V nähert. Dies liegt daran, dass einerseits mit einem Abfall der Ruhe-Spannung der Batterie-Zelle selbst zu rechnen ist, wenn diese unter ihren typischen BetriebsBereich entladen wird, und andererseits daran, dass der Innen-Widerstand in Kombination mit dem anliegenden Entlade-Strom zu einem deutlichen Zuwachs der Überspannung an dieser Batterie-Zelle führen wird. Entsprechend sind deutlich schnellere Spannungs-Änderungen zu erwarten, als dies bei einem normalen Entladen der Batterie der Fall wäre. Analog kann bei vorgegebenen Spannungs-Werten eine Strom-Antwort der Batterie beobachtet werden. Einerseits können nun Grenzwerte für die Änderungs-Raten von Spannung und Strom (dU/dt oder dl/dt), und ggf. auch für die Temperatur (dT/dt), definiert werden, ab denen eine Widerstands-Änderung bzw. eine Tief-Entladung einer der Batterie-Zellen vermutet werden kann. Alternativ kann auch ein erwarteter Spannungs-, Strom- oder ggf. Temperaturverlauf der Batterie (U(t), I(t), T(t)) mit geeigneten Toleranzen vorgegeben werden. Ein Verlassen des Toleranz-Bereichs würde dann eine Widerstands-Änderung andeuten.

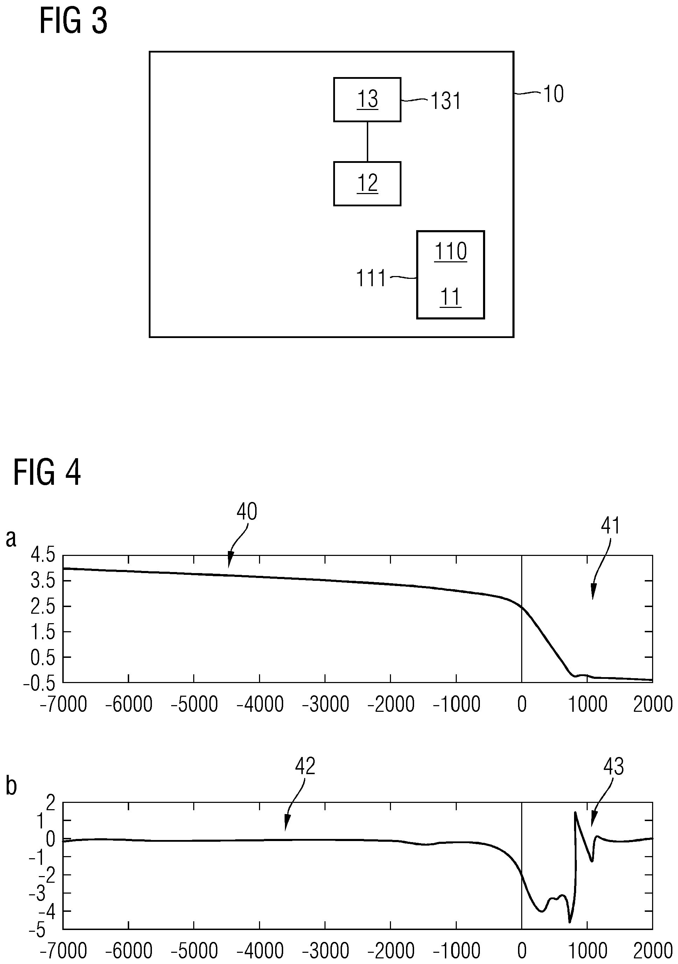

Eine weitere Möglichkeit besteht in der Erkennung von Auffälligkeiten im Spannungs-Verlauf oder im Verhalten von dU/dt. Wie in Figur 4 dargestellt, zeigt der Abfall der Zellspannung beispielsweise einen charakteristischen Wendepunkt (lokales Minimum in dU/dt bei t > 0s), sobald Batterie-Zellen eine Tief-Entladung durchlaufen. Mit der Figur 4a) ist der Spannungsverlauf und mit der Figur 4b) die zeitliche Änderung der Spannung (dU/dt) einer einzelnen Lithium-Ionen-Zelle während einer Entladung mit konstantem Entlade-Strom gezeigt. Dargestellt sind dabei sowohl die Entladung im für den Betrieb spezifizierten Spannungsbereich (in Abhängigkeit von der Zeit in s, vor dem Wendepunkt, Bezugszeichen 40 und 42) als auch während einer Tiefentladung (nach dem Wendepunkt, Bezugszeichen 41 und 43). Der Zeitpunkt t = 0s bzw. die Spannung von 2.5 V wurden markiert (Bezugszeichen 44 und 45), um zu verdeutlichen, wann die Tief-Entladung der Batterie-Zelle beginnt. Im größten Teil des spezifizierten Spannungsbereichs liegen die Werte von dU/dt unterhalb von 0.5mV/s. Während der Tiefentladung werden jedoch Werte erreicht, die einen Faktor 10 darüber liegen.

Wenn eine Auffälligkeit aufgetreten ist, so kann eine genauere Prüfung des (zeitabhängigen) Innen-Widerstands der Batterie erfolgen. Dazu können verschiedene Mess-Methoden eingesetzt werden, beispielsweise durch Impedanz-Messung, oder wie im Folgenden ausgeführt durch Relaxations-Messungen. Bei der Relaxations-Messung wird die Strom-Zufuhr unterbrochen, wodurch die Batterie-Spannung auf die aktuelle Ruhe-Spannung abklingt, Aus dem Relaxations-Verhalten der Überspannung (d.h. der Differenz zwischen messbarer Spannung und Ruhe-Spannung) kann bei bekannter Strom-Stärke der Innen-Widerstand der Batterie berechnet werden. Aus der Ruhe-Spannung lässt sich bei bekannter Spannungs-Kennlinie zudem der Lade-Zustand bzw. Rest-Energie-Inhalt der gesamten Batterie bestimmen.

Da mehrere Batterie-Zellen in einer Batterie verschaltet sind, summieren sich auch die Widerstände der einzelnen seriell verschalteten Batterie-Zellen in dieser Messung entsprechend auf. Daher gilt es, die Innen-Widerstands-Erhöhung einer einzelnen tiefentladenen Batterie-Zelle von der Erhöhung des Gesamt-Widerstands der Batterie zu unterschieden. Obwohl die Widerstands-Änderung einer Batterie-Zelle im Laufe der Tief-Entladung deutlich ausfallen kann, so sollte diese bereits möglichst frühzeitig erkannt werden, um der Belastung der betroffenen Batterie-Zelle zeitnah entgegenzuwirken.

Bei Batterie-Modulen deutet ein hoher Widerstand bereits auf eine Tief-Entladung einer Batterie-Zelle hin. Bei Hochvolt-Batterien mit über 100 seriell verbundenen Zellen werden allerdings deutlichere Unterschiede zum typischen Verhalten benötigt, um das kritische Verhalten einzelner Zellen zu identifizieren. Hierzu kann der Umstand genutzt werden, dass eine Innen-Widerstands-Erhöhung einer Batterie-Zelle auch eine Vergrößerung der Zeit-Skala bedeutet, während der die Überspannung abklingt.

Um zu beurteilen, ob die ermittelte Widerstandsänderung als signifikant angesehen werden soll, können feste Grenzwerte definiert werden oder es können prozentuale Änderungen bezogen auf zuvor erfasste Messungen/Prüfungen herangezogen werden (beispielsweise, wenn eine einzelne Zelle das 5-fache ihres ursprünglichen Widerstands erreicht). Im nächsten Schritt muss dann entschieden werden, ob der Prozesses beendet oder weitergeführt werden soll. Dies kann anhand des ermittelten Restenergieinhalts, der Ruhespannung, oder des aktuellen Innenwiderstands der Batterie bewertet werden, oder allgemein basierend auf den bisher ermittelten Verläufen aller Messwerte und Prozessparameter. Die Tiefentladung kann beispielsweise gestoppt werden, um weitere Gefahren aufgrund des aktuellen Zustands der Batterie, z.B. eine sich andeutende Erhitzung, die zum thermischen Durchgehen führen kann, auszuschließen. Andererseits können die Prozessparameter basierend auf den ermittelten Werten angepasst werden, um die Belastung auffälliger Zellen dadurch gezielt einzustellen und den Prozess somit fortzusetzen.

Eine naheliegende Anpassung ist die Änderung der Strom-Stärke, mit der die Batterie im weiteren Prozess-Verlauf entladen wird: Aus dem ermittelten Innen-Widerstand R und der Strom-Stärke I können die Überspannung η=R×I und Wärmeverluste P=R×I² der Batterie abgeschätzt werden. Da der Widerstand maßgeblich durch eine auffällige Batterie-Zelle beeinflusst werden kann, treten auch besonders hohe Überspannungen und Wärmeverluste an dieser Zelle auf. Durch Wahl der Strom-Stärke kann die betroffene Batterie-Zelle somit näherungsweise auf eine bestimmte Zell-Spannung (falls gewünscht auch gezielt unter 0 V) eingestellt werden. Dies kann verwendet werden, um bestimmte zellinterne Reaktionen zu beschleunigen oder zu vermeiden. Zusätzlich äußern sich geringere Strom-Stärken in geringeren Wärme-Verlusten und damit in weniger lokalen Temperaturerhöhungen, was ebenfalls für die Wahl der Strom-Stärke genutzt werden kann. Hierdurch verlangsamt sich gegebenenfalls die weitere Entladung der Batterie. Die Anpassung erlaubt es aber weiterhin Energie bei stark erhöhter Sicherheit des Prozesses zu entnehmen.

Sollten bei der Tief-Entladung mehrere Batterie-Zellen einen signifikanten und vergleichbaren Beitrag zum Innen-Widerstand der Batterie leisten, so sollte versucht werden, anhand der bisher erfassten Mess-Wert-Verläufe die Widerstände der einzelnen Batterie-Zellen voneinander zu unterscheiden, um eine möglichst gute Abschätzung zu treffen, welchen Einfluss die gewählten Prozess-Parameter auf die individuellen Batterie-Zellen haben. Falls eine Unterscheidung nicht möglich ist, könnte der kombinierte Innenwiderstand mehrerer auffälliger Batterie-Zellen als eine einzelne Batteroe-Zelle interpretiert werden. In diesem Fall würden sich die berechneten Überspannungen und Wärmeverluste dann zwischen den einzelnen Zellen aufteilen, so dass die Belastung jeder einzelnen Zelle entsprechend eher überschätzt würde und die Sicherheit des Prozesses hierdurch nicht gefährdet wird. Alternativ zu Anpassungen der Strom-Stärke sind auch weitere bekannte Verfahren aus dem Stand der Technik anwendbar, welche eine Reduktion der Überspannung zum Ziel haben (z.B. gepulstes Entladen). Analog sind bei Prozessen, welche die Gesamt-Spannungen, -Leistung, oder andere Parameter anstelle der Strom-Stärke an die Batterie vorgeben, auch Anpassungen dieser Werte möglich.

Die beschriebenen Schritte (Detektion, Prüfung, Anpassung) können nun wiederholt werden, um weitere Änderungen des Innenwiderstands der betroffenen Batterie-Zelle während der Tief-Entladung zu verfolgen, oder um festzustellen, ob weitere Batteroe-Zellen Auffälligkeiten zeigen. Neben einer Anpassung der Prozess-Parameter selbst können auch die Detektionskriterien (z.B. Grenzwerte dU/dt, dl/dt, dT/dt; erwartete Verläufe U(t), I(t), T(t); Prüfintervalle, etc.) und die Kriterien für das Erreichen des Prozessendes (z.B. Restenergie, Innenwiderstand) für jede Wiederholung bei Bedarf neu definiert werden. Als sinnvolles Beispiel sei eine Anpassung des erwarteten Spannungs- bzw. Stromverlaufs erwähnt, der durch Berücksichtigung des ermittelten Widerstands modifiziert werden sollte, um eine erneute Änderung des Widerstands korrekt zu detektieren.

## Patentansprüche

1. Verfahren (1000) zum Steuern eines elektrischen Entlade-Prozesses mindestens einer Batterie (11), die eine Vielzahl von elektrisch miteinander verschaltete Batterie-Zellen 1(11) aufweist, mit folgenden Verfahrens-Schritten:
a) Bestimmen (1001) des elektrischen Entlade-Prozesses,
b) Festlegen (1002) eines Soll-Wert-Bereichs einer Soll-Wert-Rate für mindestens einen zeitlich veränderbaren Batterie-Parameter,
c) Anlegen (1003) eines Entlade-Stroms an die Batterie und Ermitteln (1004) einer Ist-Wert-Rate des Batterie-Parameters,
d) Analysieren (1005) der Ist-Wert-Rate, wobei für das Analysieren geprüft wird, ob die Ist-Wert-Rate im Soll-Wert-Bereich liegt, und ob damit ein Hinweis auf eine unerwünschte zeitliche Änderung eines Innen-Widerstands zumindest einer der Batterie-Zellen der Batterie vorliegt, und
e) Steuern (1006) des elektrischen Entlade-Prozesses in Abhängigkeit eines Analyse-Ergebnisses des Analysierens.

2. Verfahren nach Anspruch 1, wobei als Entlade-Prozess der Batterie ein Tief-Entlade-Prozess der Batterie verwendet wird.

3. Verfahren nach Anspruch 1 oder 2, wobei als Batterie-Parameter zumindest eine aus der Gruppe elektrische Spannung, elektrischer Strom , elektrische Leistung und Temperatur ausgewählte physikalische Größe der Batterie verwendet wird.

4. Verfahren nach einem der Ansprüche 1 bis 3, wobei zum Steuern des Entlade-Prozesses mindestens eine aus der Gruppe Beibehalten des Entlade-Prozesses, Modifizieren des Entlade-Prozesses und Blockieren des Entlade-Prozesses ausgewählter Entlade-Modus verwendet wird.

5. Verfahren nach Anspruch 4, wobei als Entlade-Modus das Modifizieren des Entlade-Prozesses verwendet wird und zum Modifizieren des Entlade-Prozesses ein Entlade-Strom angepasst wird, mit dem die Batterie entladen wird.

6. Verfahren nach einem der Ansprüche 1 bis 5, wobei mindestens eine aus der Gruppe
i) Messung eines frequenzabhängigen Impedanz-Spektrums der Batterie und
ii) Messung eines zeitabhängigen Relaxations-Verhaltens der Batterie. ausgewählte Mess-Methode durchgeführt wird.

7. Verfahren nach einem der Ansprüche 1 bis 6, wobei zumindest einer der Verfahrens-Schritte a) bis e) und/oder zumindest eine der Mess-Methoden i) und ii) wiederholt durchgeführt werden.

8. Verfahren nach einem der Ansprüche 1 bis 7, wobei eine Batterie mit einer Vielzahl von elektrisch parallel und/oder elektrisch seriell verschalteten Batterie-Zellen von mindestens 5 und insbesondere von mindestens 50 verwendet wird.

9. Verfahren nach Anspruch 8, wobei mehrere der Batterie-Zellen zu einer Batterie-Zellen-Gruppe zusammengefasst werden und als Batterie-Parameter ein Batterie-Zellen-Gruppen-Parameter der Batterie-Zellen-Gruppe verwendet wird.

10. Verfahren nach einem der Ansprüche 1 bis 9, wobei als Batterie eine wiederaufladbare Batterie verwendet wird.

11. Verfahren nach Anspruch 10, wobei als wiederaufladbare Batterie eine Lithium-Ionen-Batterie verwendet wird.

12. Entlade-Vorrichtung zum Entladen mindestens einer Batterie, wobei die Entlade-Vorrichtung
- mindestens ein Detektor-Element zum Ermitteln der Ist-Wert-Rate des Batterie-Parameters und
- mindestens ein Steuer-Element mit elektronischer Rechen-Einheit aufweist, das zum Durchführen eines Verfahrens nach einem der Ansprüche 1 bis 11 ausgebildet ist.

13. Computerprogrammprodukt zum Durchführen eines Verfahrens nach einem der Ansprüche 1 bis 11.

14. Computerlesbares Speichermedium mit einem Computerprogrammprodukt nach Anspruch 13.

15. Wieder-Aufbereitungs-Verfahren einer Batterie unter Anwendung eines Verfahrens nach einem der Ansprüche 1 bis 11, einer Entlade-Vorrichtung nach Anspruch 12, einem Computerprogrammprodukt nach Anspruch 13 oder eines computerlesbaren Speichermediums nach Anspruch 14.
